# EUROPEAN PATENT APPLICATION

(11) **EP 4 614 313 A1**
(43) Date of publication of application: **10.09.2025**
(21) Application number: 24161064.1
(22) Date of filing: 04.03.2024
(51) Int. Cl.: G06F 8/41, G06F 11/36

(54) **TRANSLATING BEHAVIOR TREES TO PETRI NETS FOR MODEL CHECKING**

(71) Applicant: Robert Bosch GmbH, 70442 Stuttgart (DE)
(72) Inventor: Klauck, Michaela, 71272 Renningen (DE); Palmas, Matteo, 09047 Cagliari (IT); Lange, Ralph, 71277 Rutesheim (DE)

(57) **Abstract**

A computer-implemented method for verifying the autonomous behavior of an at least partially autonomous system, wherein the autonomous behavior is based on an implementation of a behavior tree, the method comprising: translating the behavior tree, or another representation thereof, to a Petri net; checking the autonomous behavior based on the Petri net, thereby generating a test result.

## Description

### State of the art

Behavior trees originate from the game development community, where they are a reactive and simple way to implement deliberation for non-playable characters. With their structure illustrating the control flow of a system, they are not only the concrete implementation running in the system and steering/controlling it in the end, but they are also easily graspable as a model of the system behavior. Recently, the development of at least partially autonomous systems has taken advantage of behavior trees to represent deliberation and policy switching in the system's implementation. For example, behavior trees have taken traction in robotics for their simplicity and ability to describe reactive behaviors and contingency policies. Additionally, the rapid development of tools to program and incorporate them into robotic frameworks, like the Robotic Operating System (ROS), a set of libraries, drivers, algorithms, etc. to implement robot applications, boosted their popularity.

However, moving to (safety-)critical applications like robotics, autonomous driving, and/or autonomous systems in general, for all their merits, behavior trees are not a well-defined formalism, which renders the direct (formal) verification of properties on models, also known as model checking, difficult or even impossible.

(Formal) verification is important for many different reasons: to check that the system does what it is intended to do in certain situations, to be sure that the system is safe, to check if there are performance limits (e.g. the battery might not be sufficient for a task), to show implementation limits, and so forth.

With model checking, we refer here to formal methods in the field of offline model checking, systematically building-up and exploring the state space of a given formal model for verification of given logical properties. This is often much faster and cheaper than running non-exhaustive testing methods on the real system. As pointed out above developers increasingly adopt implementing their system's functionality using behavior trees. However, while behavior trees of the implementation already provide a first non-formal model, a formal model is needed for model checking. In contrast to a behavior tree, a Petri net is a formal model that is used in many application fields, from planning to simulation and has proven useful and performant for formal verification. With tooling, such as e.g. STORM and GreatSPN, it lends itself well for verifying the robustness of properties expressed in temporal logics in robotic applications.

Hence, a technical problem to be solved in this disclosure can be seen in providing means to bridge the gap between a non-formal behavior tree and model checking.

### Disclosure

A first general aspect of the disclosure pertains to a computer-implemented method for verifying the autonomous behavior of an at least partially autonomous system, wherein the autonomous behavior is based on an implementation of a behavior tree. The method comprises translating the behavior tree, or another representation thereof, to a Petri net. The method may further comprise checking the autonomous behavior based on the Petri net, thereby generating a test result. A second general aspect of the disclosure pertains to a computer system configured to execute the computer-implemented method for verifying the autonomous behavior of an at least partially autonomous system according to the first general aspect (or an embodiment thereof).

A third general aspect of the disclosure pertains to a computer program configured to execute the computer-implemented method for verifying the autonomous behavior of an at least partially autonomous system according to the first general aspect (or an embodiment thereof).

A fourth general aspect of the disclosure pertains to computer readable medium or signal, storing or encoding the computer program of the third general aspect (or an embodiment thereof).

Behavior trees have recently gained traction in robotics to design and implement control policies at the deliberation level. Unfortunately, behavior trees lack a universally accepted formal definition and associated verification methods required to improve confidence in the correct behavior of at least partially autonomous systems, such as e.g. robots, in practical applications.

This problem is solved by the method of the first general aspect (or an embodiment thereof). In fact, one of the core features of the method is a translation of a behavior tree to a Petri net in order to enable verification of the modeled behavior with respect to temporal logic properties using e.g. state-of-the-art model checkers. In other words, the Petri net resulting from the translation is used as a proxy to verify the behavior modeled by the behavior tree.

In some embodiments, the translation as disclosed hereinafter takes a behavior tree, translates its nodes individually to so called Petri subnets (each of which is a Petri net) and composes and, optionally, optimizes them to an equivalent model-checkable Petri net. The equivalence is obtained by a Petri net construction simulating the behavior tree such that verification results of the Petri net are transferable back to the behavior tree.

In so doing, developers of the at least partially autonomous system benefit from being able to work in terms of a behavior tree. Still, thanks to the translation of the behavior tree to the equivalent Petri net, formal verification based on the Petri net is possible.

In case the test result is negative the behavior tree may be amended and can be checked again by repeating the method of the first general aspect (or an embodiment thereof). In so doing, the at least partially autonomous system can be improved.

In some embodiments, the method may comprise one or more optimization steps that maintain the functionality of the Petri net resulting from the translation but at the same time reduce the computational complexity of the Petri net. Generic Petri nets (those without optimization, also referred to as template Petri subnets) resulting from behavior trees may scale badly in the context of model checking (because in terms of places, transitions etc. they are just too large for efficient model checking).. Luckily, it was found that optimization of such generic Petri nets (or of the building blocks thereof) still allows for efficient model checking in relevant use cases.

### Short description of the figures

**Fig. 1** schematically illustrates example embodiments of the computer-implemented method for verifying the autonomous behavior of an at least partially autonomous system.
**Fig. 2a****-b** illustrate specific example embodiments of the computer-implemented method for verifying the autonomous behavior of an at least partially autonomous system.
**Fig. 3a** schematically illustrates an example behavior tree for a robot autonomously driving in a one-dimensional space.
**Fig. 3b** schematically illustrates another representation (e.g. an execution-flow graph) of the example behavior tree of **Fig. 3a****.**
**Fig. 4a****-b** schematically illustrate markings in a Petri net.
**Fig. 4c** schematically illustrates an interface representation of a Petri net.
**Fig. 5a** schematically illustrates a (first) template Petri subnet for an execution node of a behavior tree.
**Fig. 5b****-c** schematically illustrate a (second) template Petri subnet for a control flow node of a behavior tree.
**Fig. 6a** schematically illustrates a(n unoptimized) Petri net resulting from translating the example behavior tree of **Fig. 3a****.**
**Fig. 6b** schematically illustrates a contextual optimization of a Petri net resulting from translating the example behavior tree of **Fig. 3a****.**
**Fig. 6c** schematically illustrates an execution-flow graph-based optimization of a Petri net resulting from translating the example behavior tree of **Fig. 3a****.**

### Detailed description

As an example, imagine the developers of a domestic vacuum cleaner robot implementing a deliberation system using a behavior tree. During development they are interested in the docking maneuver, and whether once the docking station for recharging is spotted, it is always reached within, say, ten seconds. Fulfilling this property allows for better safety since the robot never risks exhausting its battery before being able to reach the docking station and recharge. It also improves energy management since the robot can plan to use less energy in order to go back for charging, being able to spend more in cleaning the house, possibly faster.

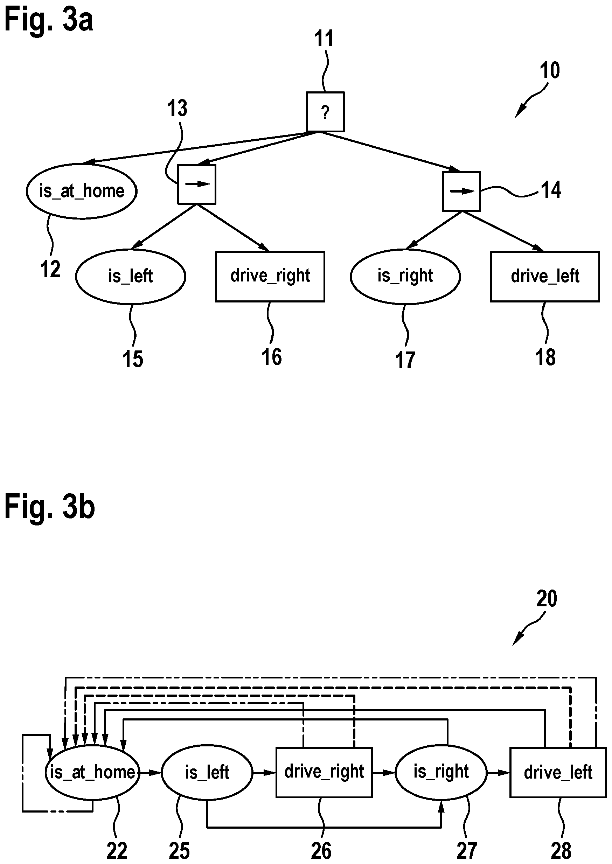

Such an example behavior tree 10 is depicted in **Fig. 3a****.** This example behavior tree shall be construed as non-limiting, as the method 100 may be applied to any behavior tree 10.

This example may only abstractly relate to the aforementioned vacuum cleaner robot and its at least partially autonomous behavior. In this example it describes the behavior of the robot autonomously driving in a one-dimensional space, i.e., on a horizontal line, trying to find the position called home (e.g. a location in one-dimensional space where the robot is recharged). The robot can sense its relative position (being at home, or on the right, or the left) and discretely move in either direction. Starting from the root node 11 of the behavior tree it is checked 12 if the robot is already at home. If not, the behavior tree 10 is traversed from left to right by checking 15 if the robot is located left to the home position. If this is the case, the robot drives right by one discrete step. If not, the next subtree is executed and it is checked 17 if the robot is located right to the home and driving to the left is executed. The tree may run for a predetermined time or forever, i.e. the execution continues at the root node 11 after driving or the robot being at home.

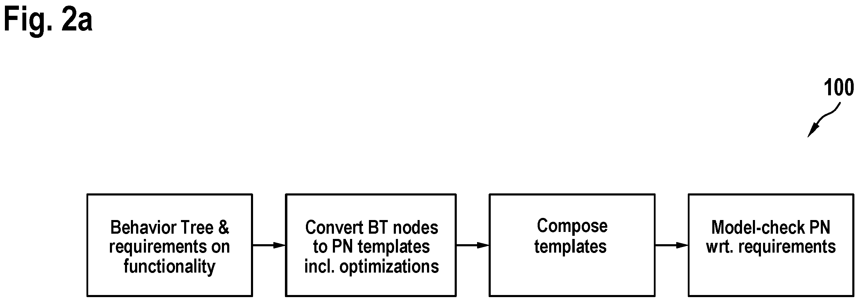

As schematically illustrated in **Fig. 2a****,** an example embodiment of the method 100 may start with a set of requirements on the system's functionality, say, the vacuum cleaner's functionality, represented by the behavior tree (abbreviated as BT). Then the behavior tree may be translated into a Petri net (abbreviated as PN). This translation method may be based on small Petri nets (in what follows referred to as template Petri subnets) simulating the functionality of single behavior tree nodes. For example, a template Petri subnet may be the most general, parametric, modular Petri net representing the behavior of the corresponding behavior tree node type. The small Petri nets may then be composed into a single Petri net that maintains (by construction) the same properties as the behavior tree. It can be given to a state-of-the-art model checker to verify that the system requirements hold.

For example, and as e.g. in **Fig. 2a****,** a behavior tree and one or more requirements on the functionality, in particular, one or more requirements on the autonomous behavior of the system may be input. One or more behavior tree (BT) nodes may then be translated individually to Petri net (PN) templates (also referred to as template Petri subnets below), optionally including one or more contextual optimizations. As e.g. in **Fig. 2a****,** the Petri net templates may be composed to a single Petri net. Subsequently, model checking is performed based on the single Petri net and the one or more requirements.

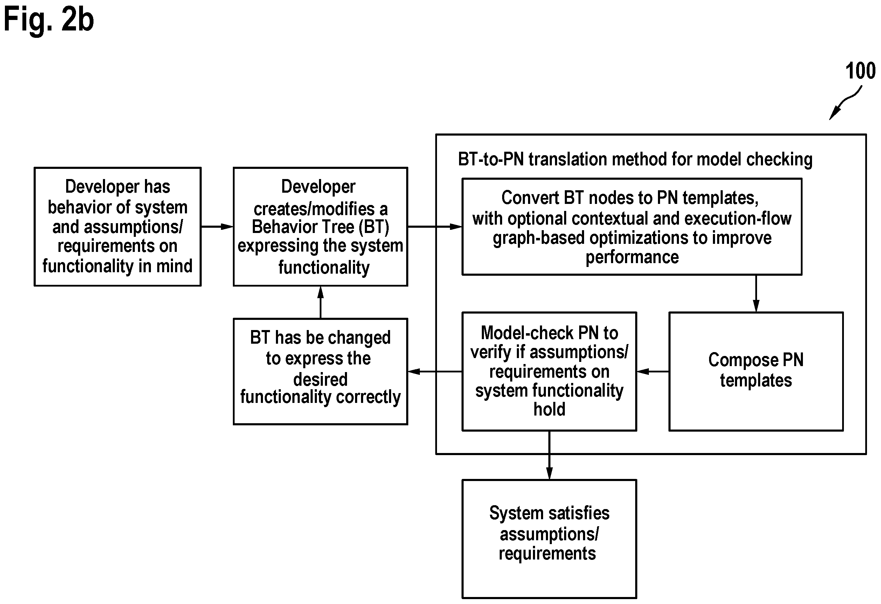

Further features of an example embodiment of the method 100 are schematically illustrated in **Fig. 2b****.** Again, the application of this method may start with the developers creating some behavior tree implementing, say again, the vacuum cleaner's functionality, which should satisfy the requirements e.g. as specified above on the docking maneuver. At the end of the implementation, they have a behavior tree, e.g. as an XML file, as taken from many state-of-the-art libraries such as e.g. BehaviorTree.cpp., and some metadata representing the additional information they have on the system. This XML specification of the behavior tree may be used in the translation method to generate a Petri net modeling the behavior of the behavior tree. For example, the developer calls an implementation of the translation method on the XML file and gets a Petri net output in form of e.g. a PNML (Petri Net Markdown Language) file. In addition, the user may specify the level of optimization of the resulting Petri net. The resulting Petri net file may then be used as the input of a model checker, like Storm, called by the developer. In addition, the developer formulates the properties he wants to verify on the system in terms of one or more logical formulae (e.g. one or more conditions). When the model checker concludes its operations, it returns either that the property is satisfied on the model, i.e. there are no runs of the system possible in which the property is violated, or it returns that the property is not satisfied in a certain run and may even provide such a counterexample. There are also model checkers returning the probability with which a property is satisfied in the system. The developers then need to decide if the result provided by the model checker is acceptable for their implementation and, if not, they must modify the behavior tree of the system accordingly to improve the result. This process may be automated by a machine learning algorithm translating the test result of the model checking procedures into changes on the behavior tree to improve the results.

For example, and as e.g. in **Fig. 2b****,** a developer may have the (intended) behavior of the system and one or more assumptions and/or requirements on the functionality, in particular, one or more requirements on the autonomous behavior of the system, in mind. The developer may then create and/or modify a behavior tree (BT), thereby expressing the system functionality. Next, a routine for BT-to-PN translation for model checking may be invoked. In so doing, behavior tree (BT) nodes may be converted to Petri net (PN) templates (also referred to as template Petri subnets below), optionally including one or more contextual and/or execution flow graph-based optimizations. As e.g. in **Fig. 2b****,** the Petri net templates may be composed to a single Petri net. Subsequently, model checking is performed based on the single Petri net and the one or more requirements, thereby verifying if the one or more assumptions/requirements on the system functionality hold (as intended). The outcome is a test result. As e.g. in **Fig. 2b****,** the test result may be positive (OK), thereby indicating that the system satisfies the one or more assumptions/requirements. On the other hand, in case the system does not satisfy an assumption/a requirement, the test result may then be (partially) negative (nOK). In this case, the behavior tree (BT) may be changed to express the desired functionality correctly ("lessons learned"). As e.g. in **Fig. 2b****,** the changed behavior tree may again be input into the routine for BT-to-PN translation for model checking. Such iterations may be repeated as need be.

In robotics, a behavior tree may be a description of the behavioral control structure of agents in form of a tree. The behavior tree may describe the execution plan defining under which conditions to execute which tasks or to switch from one task to another. This may be used to describe complex control flows and decision-making by dividing the overall functionality into smaller subtasks combined in a modular, intuitive, and/or human readable way. A behavior tree may comprise one or more leaf nodes representing atomic functionalities and skills executable by the at least partially autonomous system (also abbreviated as system; e.g. the robot). The internal nodes may represent the logic that determines which and in what order the one or more leave nodes are executed while the at least partially autonomous system is running, as well as conditions to be evaluated to decide how to proceed in the execution.

The intuitive structure of behavior trees makes their usage popular in tools like the BehaviorTree.cpp C++ library to implement task planning with behavior trees, and the ROS Navigation2 toolset, where policy switching of agents is described with behavior trees for navigator task orchestration. Due to their graphical nature, behavior trees may be developed efficiently using tools like GROOT, where nodes defined before can be composed graphically to obtain the desired behavior tree structure.

A behavior tree 10 may be a directed rooted tree where the internal nodes 11, 13, 14 may be called control-flow nodes and leaf nodes 12, 15, 16, 17, 18 may be called execution nodes. By definition, each of the control-flow nodes has at least one child. In terms of such a child the control-flow node is a parent (node).

A behavior tree may start its execution from the root node 11 that generates signals, each of these signals referred to as "Tick", with a given frequency which trigger the execution of a node. The nodes may represent conditions that are evaluated at the current state of the system and actions that can be performed. A ticked node (that is a node that just received a "Tick") may instantaneously return the signal "Running" (abbreviated as "R") to the parent node if its execution is currently taking place, "Success" (abbreviated as "S") if it has achieved its goal, or "Failure" (abbreviated as "F") otherwise. In addition, there is a signal "Halt" (abbreviated as "H") that is used to stop any running node, such that, when contingencies are needed, parent nodes can stop their children so they do not collide with the previous running nodes. Execution nodes may provide the input and output to and from the environment in which the system defined by the behavior tree is operating to make it reactive. Each control-flow node type handles distinctly whether and in which order the "Tick" is distributed to its children. A special type of control-flow nodes are decorators. They have just one child and express custom behaviors depending on its return signal. With respect to the return signals, the different control-flow node types may behave as follows:
- In a reactive sequence node (abbreviated as "→") or fallback node (abbreviated as "?"), all children are explored in order, returning their current status as soon as they are ticked. If one node fails all other running nodes in the series are halted. In reactive sequence, if all children return "Success" the parent returns the same, otherwise if one returns "Running" or "Failure", the parent returns the same. For the fallback nodes the roles of "Success" and "Failure" are inverted.
- A sequence node (abbreviated as "→*") or a fallback node ("?*" ) with memory does the same as described before, but children which already returned "Success" or "Failure", respectively, in a previous "Tick" cycle will not be ticked again.
- A parallel node (abbreviated as "=> n over k") ticks all n children in order and waits until all returned. If ≥ k children returned "Success" the parallel node returns "Success". If n-k+1 return "Failure" it returns the same and "Running" otherwise.
- An inverter node (abbreviated as "¬"), being a type of decorator nodes, returns the opposite of the child's result, with "Running" and "Halt" being their own invert.
- A force success node (abbreviated as "┬") and a force failure node (abbreviated as "_{┴}"), being a decorator, returns "Success" or "Failure", independently of the actual return of the child, except for "Running" for which again "Running" is returned.

In the example behavior tree of the 1D-robot in **Fig. 3a** some of the most commonly used node types can be identified, e.g., two different execution nodes represented by ellipses 12, 15, 17 (condition node) and rectangles 16, 18 (action node). In addition, there are two different control-flow nodes represented by squares 11, 13, 14. The squared nodes 13, 14 with an arrow are reactive sequence nodes ("→"), while the one 11 with a question mark ("?") is a reactive fallback node.

Typically, behavior trees are used with a Blackboard, a data structure that may hold global variables relevant for the execution of the system. It can be regarded as the memory or state of the system and its environment. It decouples the data used in a behavior tree from its execution logic. Although this description represents the state of the art present in textbooks and as implemented in libraries like BehaviorTree.cpp, it is neither formal enough for verification nor universally accepted in most implementations of behavior trees in the community.

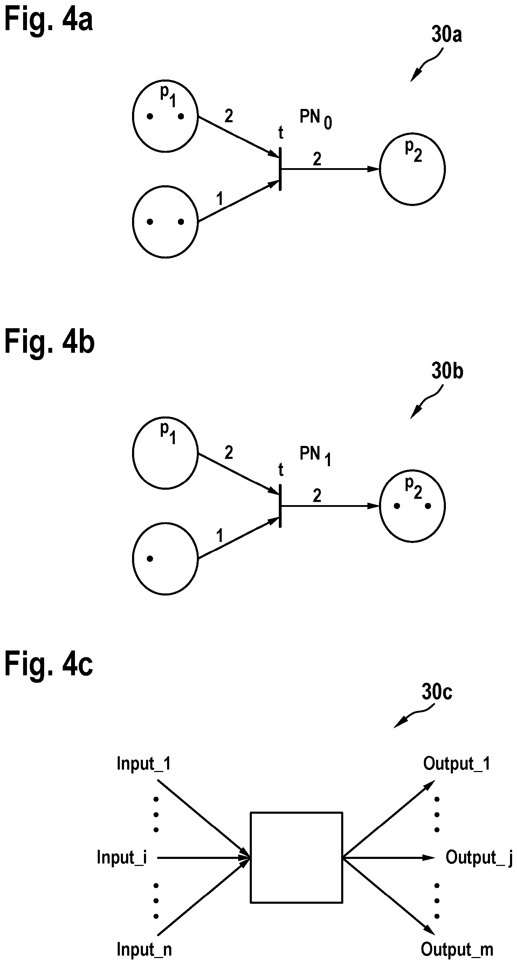

A Petri net may be represented by a bipartite graph, able to represent the distribution, conditional movement and transformation of resources inside a modeled system. This may be achieved through the activation of nodes, called transition (represented by rectangles), which move and/or transform resources and send them to distinct locations where resources can be collected, called places (represented by circles). The distribution of resources may be called the marking of a Petri net and is represented graphically by tokens (the dots) in the various places of the net. Such markings in a Petri net 30a, 30b are schematically illustrated in **Fig. 4a****-b.**

To represent time in a Petri net, transitions can be associated with probabilistic distributions. In addition, they can have probabilistic outcomes.

In general, a Petri net may be represented as an interface. An interface may completely ignore the internal structure of the Petri Net it represents. For example, it may rather focus on the inputs, the outputs and the time delay distributions between receiving the inputs and returning the outputs. An interface representation of an example Petri net 30c is schematically illustrated in **Fig. 4c****.**

There is disclosed a computer-implemented method 100 for verifying the autonomous behavior of an at least partially autonomous system (such as e.g. a robot or an autonomous vehicle), wherein the autonomous behavior is based on an implementation of a behavior tree 10. The behavior tree 10 is just an explicit and non-limiting example.

The method 100 comprises translating 120 the behavior tree 10, or another representation 20 thereof, to a Petri net 30a, 30b, 30c, 50, 60, 70. This may be the translation step required to bridge the gap between the behavior tree and formal model checking. This works best if the Petri net 50, 60, 70 is functionally equivalent or sufficiently functionally equivalent to the behavior tree 10. As stated, instead of translating the behavior tree 10, the method may comprise translating 120 the other representation 20 of the behavior tree 10. For example, this representation could be an execution-flow graph that results from eliminating one or more control flow nodes from the behavior tree 10. Again, while such a representation is not necessarily a behavior tree - in fact, the root node may have been eliminated as e.g. in **Fig. 3b** - it is functionally equivalent to the behavior tree.

The method 100 may further comprise checking 140 the autonomous behavior based on the Petri net 50, 60, 70, thereby generating a test result. Checking 140 the autonomous behavior may comprise checking whether or not, or to what extent, the autonomous behavior is as intended by one or more requirements on the autonomous behavior. Checking 140 the autonomous behavior may comprise applying a model checker based on the Petri net 50, 60, 70. For example, the Petri net may be checked by the model checker. For this purpose, e.g. state of the art Petri net model checkers such as e.g. STORM or GreatSPN may be used. The model checker may be a probabilistic model checker.

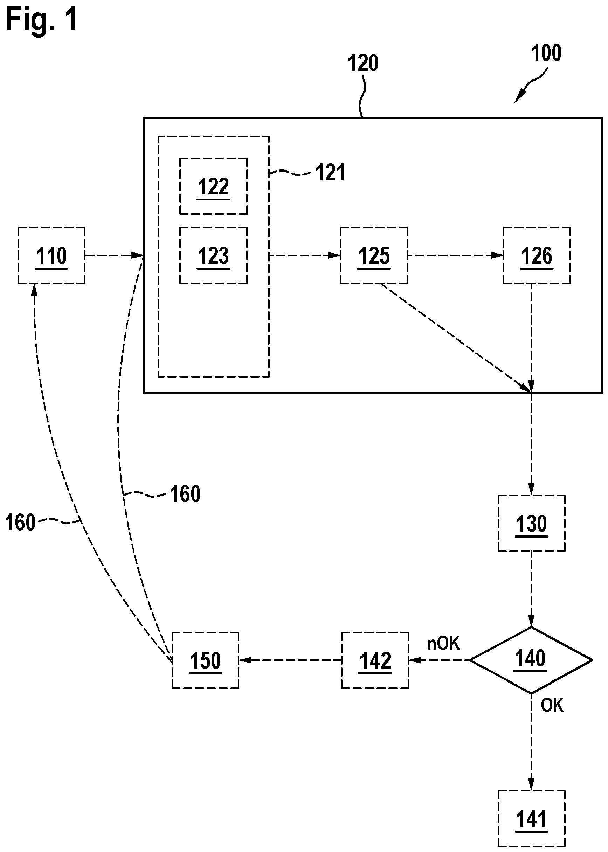

**Fig. 1** schematically illustrates embodiments of this method comprising the steps 120 and 140. The other representation 20 of the behavior tree 10 may result from optimizing 110 the behavior tree, as schematically illustrated as an option in **Fig. 1****.**

Depending on the test result one or more actions may be defined. For example, the Method 100 may comprise indicating 141, if the test result is positive ("OK" in **Fig. 1**), that the autonomous behavior has been verified. Alternatively, or in addition, the method 100 may comprise indicating 142, if the test result is negative ("nOK" in **Fig. 1**), that the autonomous behavior has not been verified and/or needs to be adapted. A similar dependence on the test result is also depicted in **Fig. 2b****.**

As schematically illustrated as an option in **Fig. 1****,** translating 120 the behavior tree 10, or the other representation 20 thereof, to the Petri net 50, 60, 70 may comprise translating 121 one or more nodes 11, 12, 13, 14, 15, 16, 17, 18, 22, 25, 26, 27, 28 of the behavior tree 10, or of the other representation 20 thereof, to corresponding Petri subnets 40a, 40b, 40c, 40d. Each of the Petri subnets may be the first template Petri subnet 40a or the second template Petri subnet 40b, 40c. Alternatively, each of the Petri subnets may be an optimized version of the first template Petri subnet 40a or the second template Petri subnet 40b, 40c. Subsequently, and again as schematically illustrated as an option in **Fig. 1****,** translating 120 the behavior tree 10, or the other representation 20 thereof, to the Petri net 50, 60, 70 may further comprise composing 125 the one or more Petri subnets 40a, 40b, 40c, 40d based on the behavior tree 10 and/or on the other representation 20 thereof, thereby generating the Petri net 50, 60, 70.

As schematically illustrated as an option in **Fig. 1****,** Translating 121 the one or more nodes of the behavior tree 10, or of the other representation 20 thereof, to corresponding Petri subnets may comprise translating 122 one or more execution nodes 12, 15, 16, 17, 18, 22, 25, 26, 27, 28 of the behavior tree 10, or of the other representation 20 thereof, to a first template Petri subnet 40a. Alternatively, or in addition, again as schematically illustrated as an option in **Fig. 1****,** translating 121 the one or more nodes of the behavior tree 10, or of the other representation 20 thereof, to corresponding Petri subnets may comprise translating 123 one or more control flow nodes 11, 13, 14 of the behavior tree 10, or of the other representation 20 thereof, to a second template Petri subnet 40b, 40c.

In other words, the translation 120 may be based on the creation (in memory of the computer system) of a template Petri subnet for each node of the behavior tree, or of the other representation 20 thereof. A template Petri subnet may be the most general, parametric, modular Petri net that is capable of representing the behavior of the corresponding node type. As stated above, there are at least two node types to deal with:
- Execution nodes that model the connection of the system to its environment.
- Control-flow nodes that implement the logic to traverse the behavior tree, defining how to get to the execution nodes in the correct order and deciding which node to run (next).

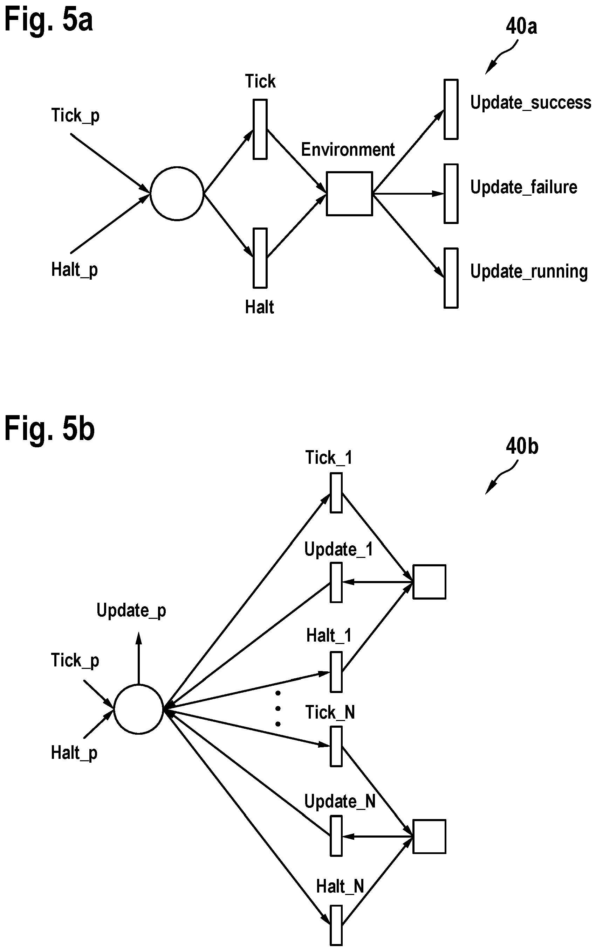

For example, the first template Petri subnet 40a, as schematically illustrated in **Fig. 5a****,** is a template Petri subnet for an execution node. It may comprise a Petri net place that receives "Tick" or "Halt" signals in terms of different Petri net token types (that may be referred to as colors) and sends those tokens to an interface ("Environment") modeling the environment and how the behavior tree interacts with it. On the right is a transition for every possible return signal ("Success", "Failure", "Running") of the behavior tree node which may also be represented by different token colors (depending on the different Petri net token types). This may be seen as the most general case. On the other hand, in the simplest case, when all outcomes are independent of the environment and have the same probability the "Tick" and "Halt" transitions and the environment may be removed and the main place may be connected to the return signal transitions, closing a self-loop.

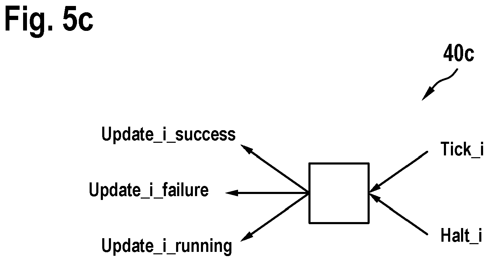

For example, the second template Petri subnet 40b (together with 40c), as schematically illustrated in **Fig. 5b** and **Fig. 5c****,** is a template Petri subnet for a control-flow node. Control-flow nodes are used to implement the internal evolution of the behavior tree during execution. In general, control-flow nodes may tick only one child at a time and have a single "Tick" signal moving through them.

To reproduce the behavior in the second template Petri subnet, for each possible signal in the behavior tree a transition may be added to the template Petri subnet whose activation depends on the state of the corresponding behavior tree node. The behavior tree node and its state may be represented in the template Petri subnet by a place containing the following six token types (colors):
- A "Tick" token in the template Petri subnet indicates the presence of the "Tick" signal in the corresponding behavior tree node.
- A Halt token does the same for the Halt signal.
- The number of "Counter" tokens indicates how many children have already returned their signal.
- The number of "Running" tokens tells how many children returned "Running".
- Same for "Success" tokens and their corresponding return signal.
- Same for "Failure" tokens and their corresponding return signal.

The marking with those token colors represents the state of the behavior tree node in the Petri net. The conditional activation of a child in the behavior tree is then translated to the Petri net by the condition on the required number of tokens in the place for the activation of an arc. Similarly, it is defined how many tokens of which type are sent to the following place. These conditions may be expressed as vector inscriptions at the arcs. In addition, priorities may be assigned to make sure that only one of the applicable transitions is activated at a time.

The general construction of the second template Petri subnet is schematically illustrated in **Fig. 5b** and **Fig. 5c****.** **Fig. 5b** shows a (complete) second template Petri subnet with inputs from parent, central place, where the state of the node is indicated by its marking, and signals sent to children (the square boxes) depicted with simplified interfaces. They take the input signal from the transitions and return one of the three return signals through the arrows pointing to the left (also referred to as arcs). **Fig. 5c** shows a (complete) interface of a child (square box). This child is one of the children (square boxes) of **Fig. 5b****.**

In **Fig. 5b****,** the (complete) second template Petri subnet is depicted with the central place that contains the tokens encoding the state of the corresponding behavior tree node. It receives the "Halt" and "Tick" signals from its parent from the left and forwards it to the squares representing the interfaces of the children. In return, the central place receives one update for each child. In **Fig. 5c****,** a general Petri net interface of a potential child node is shown, just displaying the inputs and outputs. Each specific node type template can later be extracted from this general structure by choosing the inscriptions of each arc and the priorities of each transition so that the desired behavior is obtained. To represent the behavior of parallel nodes in a Petri net, the same template structure as in **Fig. 5b** may be used with a few modifications. Again, all n children get the parent's signal in order. The calculation of the return signal is done differently, by summing the number of "Counter" tokens keeping track of how many children have returned and the number of return tokens per type ("Success", "Failure" or "Running"). There need to be n "Counter" tokens in the main place to calculate its return signal. The conditions for the return signal of the parallel node are: "Success" for a specified number k of successes of the children, "Failure" for n-k+1 of failures, and "Running" otherwise. After activating the respective transition for the return signal, the main place is emptied to reset the status of the Petri net for the next execution.

Having translated one or more, in particular, each of the nodes of the behavior tree 10 to a corresponding Petri subnet, the corresponding Petri subnets (e.g. the first and/or second template Petri subnets) are composed 125 to the Petri net 50, 60, 70.

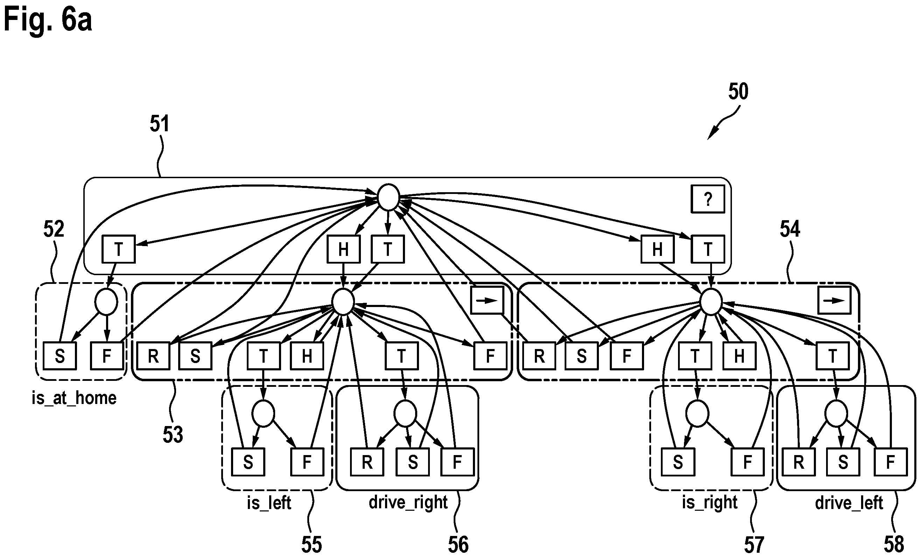

For example, the composition of the individual Petri subnets works by substituting the generic interfaces of the templates Petri subnets with the corresponding Petri net of the behavior tree node they stand for, making sure that the structure given by the behavior tree is matched (or maintained). This is demonstrated exemplarily in **Fig. 6a** for the behavior tree 10 of the 1D-robot depicted in **Fig. 3a****.** The places and transitions representing the nodes of the 1D-robot are encircled by rounded rectangles with the same color and name below as the corresponding node in the behavior tree in **Fig. 3a****.** The transitions of the Petri net are labeled with "T" for "Tick", "H" for "Halt", "S" for "Success", "F" for "Failure" and "R" for "Return".

The method 100 (or, as schematically illustrated in **Fig. 1****,** translating 120 the behavior tree 10, or the other representation 20 thereof, to a Petri net 50, 60, 70) may comprise optimizing 126 one or more Petri subnets based on meta information about the at least partially autonomous system, its environment and/or the behavior tree 10, or the other representation 20 thereof. Such an optimization may be considered a contextual optimization (cf. execution flow graph-based optimization discussed below).

The node-by-node translation to templates and their composition may lead to a functional and very general, albeit inefficient representation of the behavior tree functionality as a Petri net. The inefficiency stems from the generality of the translation itself because this makes the system big and some elements redundant, which makes model checking more expensive than necessary. Therefore, methods are provided which use additional concrete contextual information about the system, its domain, and the nature of the behavior tree to streamline and optimize the translation 120. This increases the performance when model-checking the resulting Petri net 50, 60, 70. There are at least two optimization approaches:
- The contextual optimization takes advantage of additional contextual and domain knowledge of the environment and/or concrete system functionalities to remove redundant and unused elements of the templates.
- The execution-flow graph-based optimization exploits the characteristics of control-flow nodes, except for parallel nodes, by summarizing sequences of them to reduce the number of nodes in the system while preserving properties of execution nodes. This can drastically reduce the number of nodes at the cost of losing the possibility to check properties on each specific control-flow node.

These two approaches can be applied optionally, individually, and also only partially during the translation process to obtain higher performance for model checking. In the following, a detailed description of the implementation of the two approaches is given.

The intuition behind the contextual optimization is that a more efficient representation both in terms of readability of the system description and for model checking can be achieved by fixing certain values and cutting away unused elements of each Petri subnet. This may be done by taking advantage of contextual information and domain knowledge of the concrete system functionality, i.e., additional information about the environment, the behavior tree or their interaction. For example, the optimization can be performed in three steps:
- Make timed transitions instantaneous: For every transition it is checked if it can be instantaneous by checking if the Gamma distribution that approximates the timing of the transition encodes an instantaneous firing, i.e., if the mean delay is close to zero and the standard deviation is low.
- Cut unnecessary arcs and transitions: This may include components of the Petri net that will never be executed because certain values will never appear in the concrete instance of the modeled system. In addition, arcs with probability 0 (or sufficiently small probability) are removed and arcs with probability 1 (or sufficiently high probability) are made non-probabilistic.
- Reduce number of colors: Unused token colors are eliminated, e.g., if certain return signals never occur. This reduces the dimension of the state representation of the Petri net.

In case of the example 1D-robot of **Fig. 3a** the contextual optimization may be as follows: For instance, in this example, there is no concrete environment from which the position of the robot can be extracted when evaluating the "is at home", "is left", and "is right" nodes. Therefore, an abstraction from any concrete environment can be made by assuming equal probabilities for the satisfaction of the three conditions. Having those concrete values simplifies the system while maintaining full generality. Moreover, because of the domain knowledge about the 1D-robot, the following simplifications can be done:
- All timed transitions of the Petri net can be made instantaneous since the executions of the actions in the behavior tree are considered instantaneous.
- There is no "Halt" signal in the 1D-robot since all execution nodes run instantaneous and atomic which means they cannot be interrupted in their execution.
- All execution nodes can only return "Success", since driving right or left cannot fail in the concrete implementation, i.e., the "Running" and "Failure" transitions can be removed.

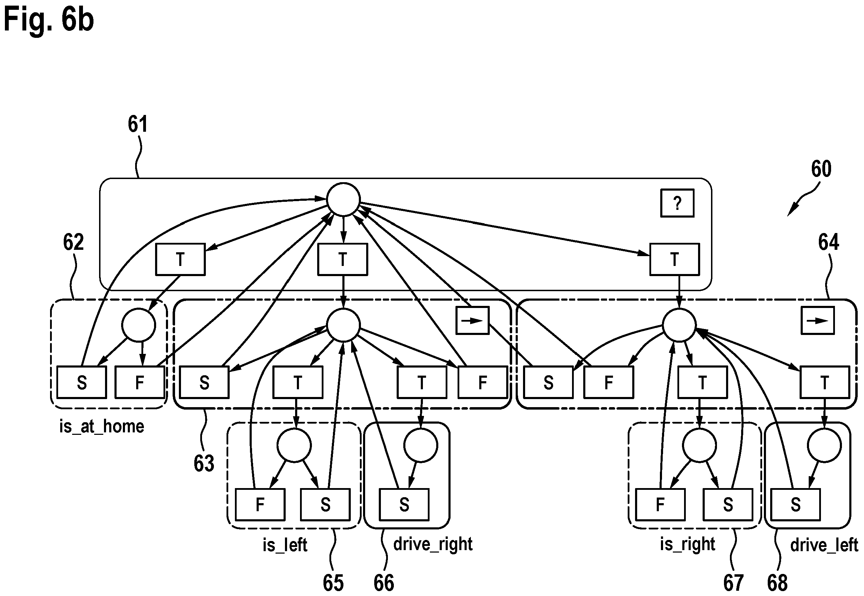

At the end of the process, the Petri net shown in **Fig. 6b** is obtained. In comparison to **Fig. 6a****,** the action nodes only have one transition corresponding to the "Success" signal since they are atomic. The control-flow nodes have just two transitions, instead of three, because the "Running" signal is not used in instantaneous transitions. Finally, there is just one transition connecting each control-flow node to its children since the "Halt" signal is not used. Each color of the arcs' inscriptions represents one of the six token types in a given order. This contextual optimization preserves a bisimulation relation between the original behavior tree and the translated Petri net because it is just enforcing the additional knowledge implicitly present in the behavior tree on the Petri net and does not modify the relations between the evolution steps in the behavior tree and the transition activations in the Petri net, which by definition preserves the bisimulation of the two.

As schematically illustrated as an option in **Fig. 1****,** the method 100 may further comprise optimizing 110 the behavior tree 10, thereby generating the other representation 20 of the behavior tree 10. For example, the other representation 20 of the behavior tree 10 may be an execution-flow graph resulting from eliminating one or more control flow nodes from the behavior tree 10.

In contrast to the contextual optimization, the execution-flow graph-based optimization may be done already in the beginning of the procedure when starting from the original behavior tree because parts of its structure can be simplified and merged before the translation to the template Petri subnets. For the explanation of this optimization procedure additional terminology is introduced. All control-flow node types except for the parallel node are called summarizable because the decision which child to explore next or what to return depends only on the currently explored child for those node types. It is not necessary to remember outcomes of previously explored nodes. In contrast, non-summarizable nodes are the execution nodes, which do not have children to summarize, and the parallel nodes because they need to keep track of the status of previously explored children. (By adding more token colors and helper structures to the template Petri subnets of parallel nodes, they can also be transformed such that they can be summarized, but this potentially adds more complexity instead of optimizing the translation procedure efficiently). The execution-flow graph-based optimization comprises the following steps:
- Construction of execution-flow graph: An execution-flow graph is constructed for every series of summarizable nodes in the behavior tree (e.g., the root fallback node 11 and its two sequence node children 13,14 in the example 1D-robot in **Fig. 3a**) connecting all non-summarizable nodes (the execution nodes in the example) with the non-summarizable node ticked afterwards depending on the logic of the summarizable nodes and return signal. **Fig. 3b** shows the execution-flow graph for the example 1D-robot of **Fig. 3a****,** where each execution node is connected to the execution node ticked next given the return signal and the logic of the fallback and sequence nodes.
- Construction of the Petri net using execution-flow graph: With this execution-flow graph a simplified model of the system may be obtained. This can then be converted into a Petri net by translating each of its nodes into a template as described for the individual behavior tree nodes and composing the template Petri subnets using the structure given by the execution-flow graph. The connections between template Petri subnets can either be implemented by going directly to the next non-summarizable node or through an additional summarizable node added as the root of the resulting Petri net. The choice whether to add such an additional root node has to be made by taking into consideration how the properties for model-checking the Petri net should be formulated in the end. Connecting to the additional root may make writing the properties more intuitive and requires less knowledge about the sequence of nodes, while not connecting to the additional root node reduces the number of places and transitions in the resulting Petri net, but requires the knowledge of the order of execution to write properties. When not adding the additional root node, each series of summarizable nodes is modeled as only one transition with just one token to activate the transition. Otherwise, the sequence is implemented as a summarizable node (c.f. **Fig. 5b****-c**) with the interfaces being substituted by the non-summarizable nodes and the conditions for arc activations are modified so that it maintains the same order of execution as defined in the execution-flow graph.
- Composition of timed transitions: The direct connection of non-summarizable node templates according to the execution-flow graph can lead to sequences of timed transitions which do not occur in non-optimized Petri nets. In case there are timed transitions in the original behavior tree description, two different methods of composition can be chosen after the construction of the Petri net using the execution-flow graph:
   - (1) Memory efficient solution: The composition of Gamma distributions, computed as the convolution of them, can generally be approximated as a Gamma distribution with parameter α being the sum of the individual oi, and β calculated by solving an optimization problem. This reduces the memory requirements of the resulting transition to three parameters, from storing two per transition in the original sequence, while losing some accuracy because of the non-perfect approximation. The third parameter, even if not a parameter of the Gamma distribution per se, refers to the delay as an effect of all distributions with a small enough standard deviation and can be seen as a translation of the time parameter of some fixed delay k equal to the sum of the mean of the Gamma distributions with small enough standard deviation. Mathematically, the Gamma distribution of a series of transitions can then be written as: G(t - k, α, β).
      (2) Accuracy efficient solution: In this case, the distributions are sampled, making them discrete series, and performing a discrete convolution over them to obtain the resulting series. All parameters of the components have to be stored but the precision of the result can be controlled by changing the sampling frequency: the higher the frequency, the more precise the result, but the higher the computation time.

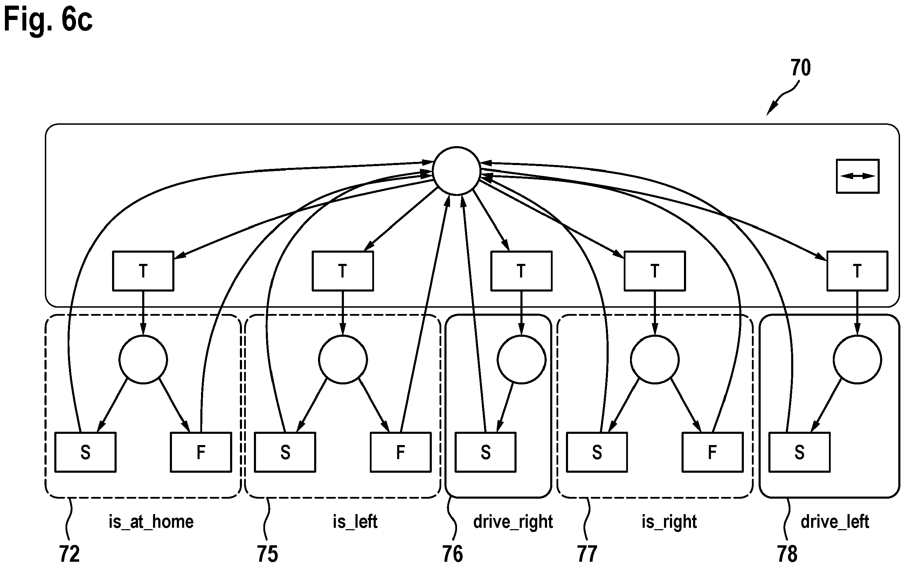

For example, after the application of these three execution-flow graph-based optimization steps together with the contextual optimization to the 1D-robot the Petri net as shown in **Fig. 6c** is obtained. In the execution-flow graph-based optimization the additional root node of the series of summarizable nodes has been used.

As schematically illustrated as an option in **Fig. 1****,** the method 100 may further comprise optimizing 130 the Petri net 50, 60. For example, the contextual and/or execution flow graph-based optimizations discussed above may be implemented at any stage of the method 100, e.g. even only in the composed Petri net.

Further optimizations of the Petri net are possible.

For example, as another or a final optimization step, the Petri net can be transformed into a non-colored one, i.e., having only one token color, by mapping each return signal ("Success", "Failure" or "Running") and the receiving non-summarizable node of the behavior tree to a certain number of tokens required for the arc activation. In the case where the root of each series of summarizable nodes is not added to the Petri net, the number of tokens can represent which signal type is flowing through the Petri net. For instance, one token in the main place of a template Petri subnet represents the "Tick", while two tokens represent the "Halt", and tree indicate a "Success" return signal. In the case where the root of the series is added in the Petri net, this mapping to a number of tokens indicating which node to execute next is done by tracing the path of a signal, for example the "Tick", in the execution-flow graph (**Fig. 3b**) and indexing the nodes in the exploration order. These indices are then used as the number of tokens required to proceed with the corresponding node during the execution. If there is more than one signal used in the behavior tree, e.g., the "Halt" signal in addition to the "Tick", the two index series must be distinguished. One simple solution is to assign the sequence of all odd integers to the "Tick" and of all even integers to the "Halt". By applying this optimization step to the example 1-D robot, the Petri net may be further transformed, with the vectors of numbers of required token colors for the arc activation converted to single numbers. Although the execution-flow graph-based optimization does not preserve bisimulation between the initial behavior tree and the corresponding Petri net, it does preserve all properties relying on the signals reaching the non-summarizable nodes. Since
all information about the summarizable nodes is summarized, there are states of the behavior tree that are not present in the generated Petri net, which then breaks the bisimulation. The nodes that have not been summarized still preserve the same bisimulation they had with the unoptimized or contextually optimized system, which means that at all properties related to them are maintained.

The ability to translate the model checking results on the Petri net back to the initial behavior tree relies on a notion of equivalence of both representations (that is before and after the translation). A sketch of a proof is as follows:
The argumentation is done by induction starting from the following assumptions:
- The templates behave the same as the node types they represent, i.e., the way templates are constructed is correct.
- The behavior of children seen from the perspective of the parent can be abstracted by just considering the return signal they give to the parent, while the internal state of the children, the state of their children, or any other external variables can be ignored.

To prove that these assumptions can be made, two steps have to be taken: The first is to simulate the template Petri subnets for every node type and verify that for every possible return signal of the children the correct behavior is obtained (this was done during their development). The second is to remember that in the templates interfaces are used to represent children, which do not depend on any state or variable but only on inputs.

Relying on those assumptions the proof by induction can start. The base case is obtained by considering the leave nodes. Since they are translated to interfaces, they model the correct behavior by construction. Going one level higher, the one below can be simplified as interfaces and the templates behave as the node types they represent (by the first assumption). This entails that each Petri net at this level will behave as the corresponding subtree in the behavior tree. Going at any level higher than this the same reasoning can be applied, obtaining fewer subtrees at each level. The process continues until there is only one tree and one Petri net starting from the template corresponding to the root of the behavior tree, still maintaining the same behavior.

As schematically illustrated as an option in **Fig. 1****,** the method 100 may further comprise adapting 150 the behavior tree 10, or the other representation 20 thereof, based on the test result. For example, the behavior tree 10, or the other representation 20 thereof, may be adapted 150 using a (pre-trained) machine learning algorithm. Alternatively, the behavior tree 10 may be manually adapted 150 based on the test result.

As also schematically illustrated as an option in **Fig. 1****,** the method 100 may further comprise repeating 160 the method 100. In other words, the method 100 may be repeated or another embodiment of the method 100 may be rerun. Such may be useful for checking an adapted 150 behavior tree or an adapted 150 representation of the behavior tree. Such iterations may be repeated as the case be.

Further disclosed is a computer system adapted to perform the computer-implemented method 100 for verifying the autonomous behavior of an at least partially autonomous system. The computer system may include a processor and/or a memory.

Further disclosed is a computer program adapted to execute the computer-implemented method 100 for verifying the autonomous behavior of an at least partially autonomous system. The computer program may, for example, be in interpretable or compiled form. It can be loaded (also in parts) into the RAM of a computer for execution, for example as a bit or byte sequence.

Further disclosed is a computer readable medium or signal that stores and/or encodes the computer program. The medium may include, for example, one of RAM, ROM, EPROM, HDD, SSD, ... on/in which the signal is stored.

Further disclosed is an at least partially autonomous system (abbreviated as system), comprising a non-volatile storage storing or encoding an implementation (e.g. a compiled computer program) of a behavior tree, wherein the implementation causes autonomous behavior of the system. The at least partially autonomous system can be designed or configured as an (industrial) robot, a self-driving vehicle, a smart home system (including autonomous lawn mowers and autonomous vacuum cleaners), an unmanned aerial vehicle (UAV), an autonomous agricultural machinery, and an underwater vehicle.

The system may further comprise a control unit configured to run the implementation, thereby realizing autonomous behavior of the system. The autonomous behavior may have been verified according to the method 100.

## Claims

1. Computer-implemented method (100) for verifying the autonomous behavior of an at least partially autonomous system, wherein the autonomous behavior is based on an implementation of a behavior tree (10), the method (100) comprising:
- translating (120) the behavior tree (10), or another representation (20) thereof, to a Petri net (30a, 30b, 30c, 50, 60, 70);
- checking (140) the autonomous behavior based on the Petri net (50, 60, 70), thereby generating a test result.

2. Method (100) of claim 1, wherein checking (140) the autonomous behavior comprises checking whether or not, or to what extent, the autonomous behavior is as intended by one or more requirements on the autonomous behavior.

3. Method (100) of claim 1 or 2, wherein checking (140) the autonomous behavior comprises applying a model checker, optionally a probabilistic model checker, based on the Petri net (50, 60, 70).

4. Method (100) of one of the preceding claims, comprising:
- indicating (141), if the test result is positive, that the autonomous behavior has been verified; and/or
- indicating (142), if the test result is negative, that the autonomous behavior has not been verified and/or needs to be adapted.

5. Method (100) of one of the preceding claims, wherein the Petri net (50, 60, 70) is functionally equivalent or sufficiently functionally equivalent to the behavior tree (10).

6. Method (100) of one of the preceding claims, wherein translating (120) the behavior tree (10), or the other representation (20) thereof, to the Petri net (50, 60, 70) comprises:
- translating (121) one or more nodes (11, 12, 13, 14, 15, 16, 17, 18, 22, 25, 26, 27, 28) of the behavior tree (10), or of the other representation (20) thereof, to corresponding Petri subnets (40a, 40b, 40c, 40d);
- composing (125) the one or more Petri subnets (40a, 40b, 40c, 40d) based on the behavior tree (10) and/or on the other representation (20) thereof, thereby generating the Petri net (50, 60, 70).

7. Method (100) of claim 6, wherein translating (121) the one or more nodes of the behavior tree (10), or of the other representation (20) thereof, to corresponding Petri subnets comprises:
- translating (122) one or more execution nodes (12, 15, 16, 17, 18, 22, 25, 26, 27, 28) of the behavior tree (10), or of the other representation (20) thereof, to a first template Petri subnet (40a); and/or
- translating (123) one or more control flow nodes (11, 13, 14) of the behavior tree (10), or of the other representation (20) thereof, to a second template Petri subnet (40b, 40c).

8. Method (100) of claim 6 or 7, comprising:
- optimizing (126) one or more Petri subnets based on meta information about the at least partially autonomous system, its environment and/or the behavior tree (10), or the other representation (20) thereof.

9. Method (100) of one of the preceding claims, comprising:
- optimizing (110) the behavior tree (10), thereby generating the other representation (20) of the behavior tree (10);
optionally, wherein the other representation (20) of the behavior tree (10) is an execution-flow graph resulting from eliminating one or more control flow nodes from the behavior tree (10).

10. Method (100) of one of the preceding claims, comprising:
- optimizing (130) the Petri net (50, 60).

11. Method (100) of one of the preceding claims, comprising:
- adapting (150) the behavior tree (10), or the other representation (20) thereof, based on the test result.

12. Method (100) of one of the preceding claims, comprising:
- repeating (160) the method (100) according to one of the preceding claims.

13. Computer system configured to execute the computer-implemented method (100) for verifying the autonomous behavior of an at least partially autonomous system according to one of the preceding claims.

14. Computer program configured to execute the computer-implemented method (100) for verifying the autonomous behavior of an at least partially autonomous system according to one of the claims 1 to 12.

15. Computer readable medium or signal, storing or encoding the computer program of claim 14.
